# FASCICULE DE BREVET EUROPEEN

(11) **EP 2 691 265 B1**
(45) Date de publication et mention de la délivrance du brevet: **06.05.2015**
(21) Numéro de dépôt: 12717339.1
(22) Date de dépôt: 29.03.2012
(51) Int. Cl.: B60Q 1/14

(54) **ENSEMBLE DE COMMANDES POUR HAUT DE COLONNE DE DIRECTION DE VÉHICULE AUTOMOBILE**
STEUERUNGSGRUPPE FÜR DAS OBERE ENDE EINE KRAFTFAHRZEUGLENKSÄULE
SET OF CONTROLS FOR THE TOP OF A MOTOR VEHICLE STEERING COLUMN

(30) Priorité: 31.03.2011 FR 1100945
(43) Date de publication de la demande: 05.02.2014
(73) Titulaire: SC2N, 94046 Creteil Cedex (FR)
(72) Inventeur: HALLET, Michel, F-14320 Clinchamps-sur-Orne (FR)
(74) Mandataire: Pothmann, Karsten
(86) Numéro de dépôt international: PCT/FR2012/000117
(87) Numéro de publication internationale: WO 2012/131193

(56) Documents cités:
- WO-A1-2010/000859
- WO-A1-2010/109097
- WO-A1-2010/109098
- US-A- 5 895 899

## Description

La présente invention concerne un ensemble de commandes pour haut de colonne de direction de véhicule automobile.

Les ensembles de commande pour haut de colonne de direction de véhicule automobile regroupent dans un même système plusieurs manettes de commutation pour la commande de fonctions d'éclairage, d'essuyage, des clignotants ou encore des fonctions audio, de téléphonie ou de régulation de vitesse.

On connaît par exemple du document WO 2010/000859 un ensemble de commandes pour haut de colonne qui présente des manettes de commutation pouvant se brancher sur un support central présentant un microcontrôleur. Dans ce document, un réseau de pistes électriques interconnecté raccorde une pluralité d'interrupteurs aux entrées et sorties du microcontrôleur. A partir des signaux envoyés en sortie et reçus en entrée, le microcontrôleur déduit les états des interrupteurs de la manette de commutation et la nature des commandes à mettre en oeuvre. Chaque sortie du microcontrôleur est ainsi reliée à un moyen de mise sous tension comprenant un transistor raccordé à une tension d'alimentation, via une résistance d'adaptation. Des diodes sont raccordées entre les transistors et les interrupteurs pour éviter que le courant injecté par les moyens de mise sous tension vers les interrupteurs ne retourne vers ceux-ci et pour éviter les interférences des interrupteurs reliés sur une même entrée du microcontrôleur. Les diodes et les résistances d'adaptation sont raccordées électriquement sur une carte à circuit imprimé de l'ensemble de commandes.

Un des buts de la présente invention est de proposer un ensemble de commandes sous-volant ayant une conception simplifiée nécessitant moins de composants électroniques.

A cet effet, l'invention a pour objet un ensemble de commandes pour haut de colonne de direction de véhicule automobile comportant :
- un microcontrôleur présentant au moins deux entrées et au moins deux sorties,
- un nombre prédéfini de commutateurs comportant chacun au moins une première et au moins une deuxième plages de contactage, et pouvant prendre un état de commutation fermé dans lequel les plages de contactage sont connectées entre elles par un moyen de contactage mobile de l'ensemble de commandes et un état de commutation ouvert dans lequel les plages de contactage sont déconnectées, le microcontrôleur comportant des moyens de traitement pour commander des fonctions du véhicule selon les états de commutation des commutateurs,
- un réseau de pistes électriques comportant des pistes d'entrée raccordant les premières plages de contactage des commutateurs à une entrée du microcontrôleur et des pistes de sorties raccordant les deuxièmes plages de contactage des commutateurs à une sortie du microcontrôleur,
caractérisé en ce que :
- un moyen de contactage mobile est associé à une série comportant un ensemble de commutateurs dont les premières plages de contactage sont respectivement raccordées à des entrées distinctes du microcontrôleur et dont les deuxième plages de contactage sont raccordées à une même sortie du microcontrôleur, en ce que
- pour chaque série, le moyen de contactage mobile associé peut prendre plusieurs positions parmi lesquelles au plus une position active de contactage dans laquelle le moyen de contactage mobile connecte deux plages de contactage entre elles de manière à ne fermer qu'un seul commutateur de la série à la fois, et en ce que
- les moyens de traitement du microcontrôleur sont programmés pour associer des commandes de fonctions antinomiques du véhicule à chaque position pouvant être prise par le moyen de contactage mobile d'une série.

Dans une série dont un seul commutateur peut être fermé à la fois, on fait correspondre la commande de fonctions antinomiques, c'est-à-dire contraires ou opposées, s'excluant l'une l'autre. Ainsi, il n'est pas possible d'activer à la fois par exemple l'allumage des feux de croisement et l'extinction de ceux-ci, les différentes fonctions associées à la série étant antinomiques. Il n'y a donc pas d'interférences possibles sur les entrées du microcontrôleur, le signal envoyé en sortie du microcontrôleur ne peut atteindre qu'une seule entrée puisqu'un seul commutateur de chaque série ne peut être fermé à la fois. Par conséquent, il n'est pas nécessaire de positionner des diodes entre les commutateurs d'une même série pour empêcher ces interférences. L'actionnement des moyens de contactage mobiles par les manettes de commutation est donc adapté physiquement au raccordement des entrées/sorties du microcontrôleur, faisant ainsi correspondre intelligemment à chaque organe de la manette de commande manoeuvré par l'utilisateur des fonctions antinomiques, ce qui permet de simplifier les raccordements électriques en n'utilisant plus de diodes et de limiter la taille de la carte à circuit imprimé dans l'ensemble de commandes, voire même de ne plus utiliser du tout de carte à circuit imprimé dans le support central de l'ensemble de commandes lorsque le microcontrôleur est déporté par exemple dans la planche de bord.

Selon une ou plusieurs caractéristiques de l'ensemble de commandes prise seule ou en combinaison :
- une série est destinée à la commande des feux du véhicule et la position active de contactage pouvant être prise par le moyen de contactage mobile de ladite série destinée à la commande des feux du véhicule, correspond soit à la commande d'allumage des feux de croisement, soit à la commande d'allumage des feux de position, soit à la commande d'extinction des feux de croisement et de position, soit à la commande de mise en route automatique des feux de croisement,
- une série est destinée à la commande des feux antibrouillard du véhicule et la position active de contactage pouvant être prise par le moyen de contactage mobile de ladite série destinée à la commande des feux antibrouillard du véhicule, correspond soit à la commande d'allumage des feux antibrouillard avant, soit à la commande d'allumage des feux antibrouillard avant et arrière, soit à la commande d'extinction des feux antibrouillard avant, soit à la commande d'extinction des feux antibrouillard avant et arrière,
- une série est destinée à la commande des phares du véhicule et la position active de contactage pouvant être prise par le moyen de contactage mobile de ladite série destinée à la commande des phares du véhicule, correspond soit à la commande plein phares, soit à la commande d'appel plein phares,
- une série est destinée à la commande des feux de direction du véhicule et la position active de contactage pouvant être prise par le moyen de contactage mobile de ladite série destinée à la commande des feux de direction du véhicule, correspond soit à la commande d'allumage des feux de direction signalant une déportation à droite, soit à la commande d'allumage des feux de direction signalant une déportation à gauche,
- une série est destinée à la commande des balais d'essuyage avant du véhicule et la position active de contactage pouvant être prise par le moyen de contactage mobile de ladite série destinée à la commande des balais d'essuyage avant du véhicule, correspond soit à la commande de la mise en route des balais d'essuyage avant à grande vitesse, soit à la commande la mise en route des balais d'essuyage avant à petite vitesse, soit à la commande d'arrêt des fonctions d'essuyage avant,
- une série est destinée à la commande de la fréquence d'intermittence des balais d'essuyage du véhicule et la position active de contactage pouvant être prise par le moyen de contactage mobile de ladite série destinée à la commande de la fréquence d'intermittence des balais d'essuyage du véhicule, correspond à la commande d'une fréquence d'intermittence distincte des balais d'essuyage,
- une série est destinée à la commande de l'essuyage de la vitre arrière du véhicule et la position active de contactage pouvant être prise par le moyen de contactage mobile de ladite série destinée à la commande de l'essuyage de la vitre arrière du véhicule, correspond soit à la mise en route de l'essuyage de la vitre arrière du véhicule, soit à la mise en route du lavage et de l'essuyage de la vitre arrière du véhicule, soit à l'arrêt des fonctions de lavage et d'essuyage arrière,
- au moins un moyen de contactage mobile d'une série comporte un chariot de contactage présentant au moins un élément conducteur sollicité en translation sur les plages de contactage,
- au moins un moyen de contactage mobile d'une série comporte une fourche rotative conductrice sollicitée en rotation sur les plages de contactage,
- au moins un moyen de contactage mobile d'une série comporte au moins un élément conducteur sollicité sensiblement à l'aplomb des plages de contactage,
- les deuxièmes plages de contactage raccordées à une même sortie du microcontrôleur sont portées par une plage de contactage commune,
- ledit réseau de pistes électriques et lesdites plages de contactage comportent des inserts métalliques surmoulés,
- ledit moyen de contactage mobile est entraîné en translation sur les plages de contactage par la rotation d'une bague d'une manette de commutation de l'ensemble de commandes,
- ledit moyen de contactage mobile est entraîné en translation sur les plages de contactage par le pivotement d'un levier d'une manette de commutation de l'ensemble de commandes,
- parmi les positions que peut prendre ledit moyen de contactage mobile, ledit moyen de contactage mobile peut prendre au plus une position neutre dans laquelle il est déconnecté des entrées du microcontrôleur,
- ledit ensemble de commandes comporte au moins un commutateur supplémentaire comportant des plages de contactage supplémentaires pouvant être contactées par le moyen de contactage mobile dans la position neutre, les premières plages de contactage supplémentaires au moins étant à un potentiel flottant,
- dans une série, les moyens de traitement du microcontrôleur sont programmés pour associer une fonction de sécurité de mise en route minimale d'organes du véhicule lorsqu'aucun signal n'est reçu sur les entrées alors qu'un signal est envoyé en sortie,
- dans la série destinée à la commande des feux du véhicule, la fonction pouvant être prise dans la position neutre du moyen de contactage mobile de la série, correspond à une commande de mise en route automatique de l'allumage des feux de croisement,
- dans la série destinée à la commande des balais d'essuyage avant du véhicule, la fonction pouvant être prise dans la position neutre du moyen de contactage mobile de la série, correspond à une commande de mise en route automatique des balais d'essuyage avant,
- dans la série destinée à la commande de la fréquence d'intermittence des balais d'essuyage du véhicule, la fonction pouvant être prise dans la position neutre du moyen de contactage mobile de la série correspond à la commande d'une fréquence minimale d'intermittence,
- un premier moyen de contactage mobile associé à une première série est couplé au déplacement d'un moyen de contactage mobile doublon, associé à une série doublon, la première série et la série doublon étant destinées à la commande des mêmes fonctions, le premier moyen de contactage mobile et le moyen de contactage mobile doublon pouvant connecter simultanément les plages de contactage d'un commutateur de la première série et d'un commutateur de la série doublon, les commutateurs de la première série et de la série doublon destinés à la commande de la même fonction étant raccordés à des entrées distinctes,
- le premier moyen de contactage mobile et le moyen de contactage mobile doublon sont rotatifs et présentent des éléments conducteurs angulairement décalés et sollicités à l'encontre de plages de contactage disposées en cercle.

D'autres caractéristiques et avantages de l'invention ressortiront de la description suivante, donnée à titre d'exemple, sans caractère limitatif, en regard des dessins annexés sur lesquels :
- la figure 1 représente des éléments d'un ensemble de commandes pour haut de colonne de direction de véhicule automobile,
- la figure 2 est une vue schématique d'éléments de raccordement électrique d'un premier mode de réalisation d'un ensemble de commandes,
- la figure 3a représente une vue schématique de dessous d'un moyen de contactage mobile connectant les plages de contactage d'un commutateur,
- la figure 3b est une vue similaire à la figure 3a dans laquelle le moyen de contactage mobile est déplacé à l'écart des plages de contactage du commutateur,
- la figure 4 est une vue schématique des plages de contactage des commutateurs et d'un moyen de contactage mobile d'un premier exemple de réalisation d'une série,
- la figure 5 est une vue schématique des plages de contactage des commutateurs et d'un moyen de contactage mobile d'un deuxième exemple de réalisation d'une série,
- la figure 6 est une vue schématique de réalisation d'un ensemble de plages de contactage des commutateurs et des moyens de contactage mobile de l'ensemble de commandes de la figure 2,
- la figure 7 est une vue similaire à la figure 2 après que l'utilisateur ait actionné une bague rotative d'une manette de commande,
- la figure 8 est une vue similaire à la figure 6 après que l'utilisateur ait actionné une bague rotative de la manette de commande,
- la figure 9 est une vue schématique d'éléments de raccordement électrique d'un deuxième mode de réalisation d'un ensemble de commandes, et
- la figure 10 est une vue schématique d'éléments de raccordement électrique d'un troisième mode de réalisation d'un ensemble de commandes.

Sur ces figures, les éléments identiques portent les mêmes numéros de référence.

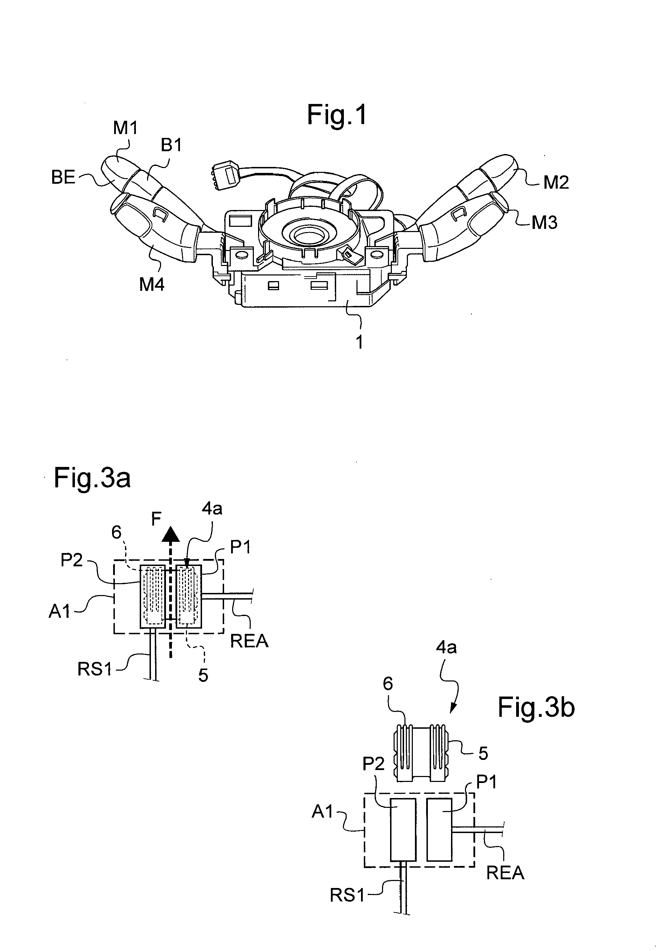

L'ensemble de commandes comporte un support central 1 (figure 1), destiné à être monté sous le volant en haut d'une colonne de direction de véhicule automobile, et des manettes de commutation M1, M2, M3, M4 branchées dans des emplacements du support central 1, à gauche et à droite de la colonne de direction.

L'ensemble de commandes comporte en outre un microcontrôleur présentant au moins deux entrées et au moins deux sorties, un nombre prédéfini de commutateurs notamment pour la commande de fonctions d'éclairage, d'essuyage ou des clignotants, des moyens de contactage mobiles et un réseau de pistes électriques.

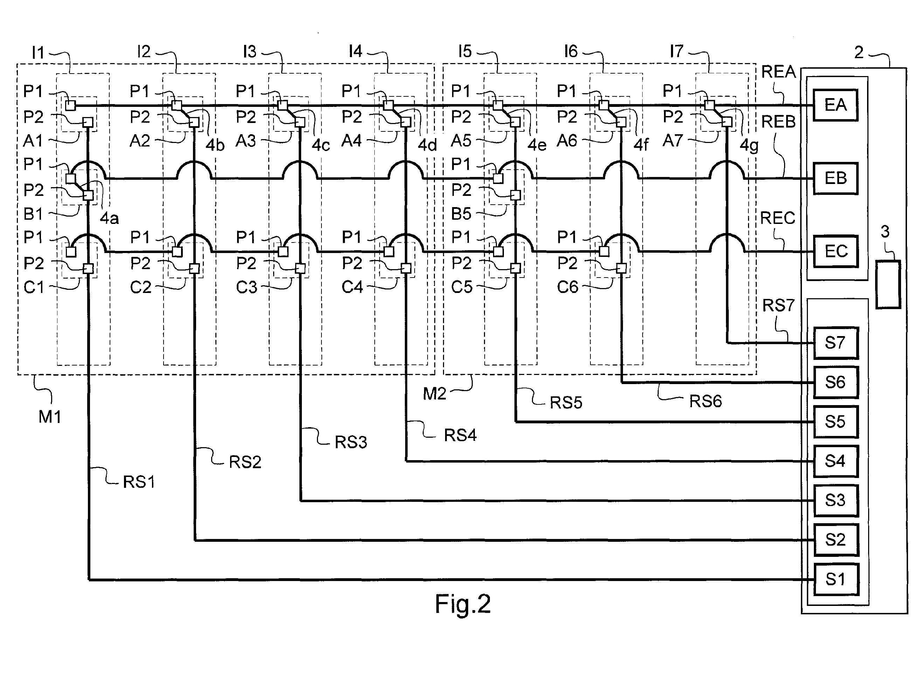

Comme on peut le voir sur l'exemple de la figure 2, le microcontrôleur 2 comporte trois entrées EA, EB, EC et sept sorties S1, S2, S3, S4, S5, S6, S7 et des moyens de traitement 3 pour commander des fonctions du véhicule selon les états de commutation des commutateurs. Le microcontrôleur 2 peut être placé dans le support central 1 en haut de la colonne de direction ou dans la planche de bord du véhicule automobile.

Chaque commutateur comporte une première et une deuxième plages de contactage P1, P2, raccordées aux entrées-sorties du microcontrôleur 2 par le réseau de pistes électriques.

Conformément à l'exemple de la figure 2, l'ensemble de commandes comporte ainsi quinze commutateurs A1, A2, A3, A4, A5, A6, A7, B1, B5, C1, C2, C3, C4, C5 et C6 raccordés aux entrées-sorties du microcontrôleur 2 par le réseau de pistes électriques.

Plus précisément, le réseau de pistes électriques comporte des pistes d'entrée REA, REB, REC raccordant les premières plages de contactage P1 des commutateurs respectivement à une entrée EA, EB, EC du microcontrôleur 2 et des pistes de sorties RS1, RS2, RS3, RS4, RS5, RS6 et RS7 raccordant les deuxièmes plages de contactage P2 des commutateurs à une sortie S1-S7 du microcontrôleur 2.

On définit une série par l'ensemble de commutateurs dont les premières plages de contactage P1 sont respectivement raccordées à des entrées distinctes EA, EB, EC du microcontrôleur 2 et dont les deuxièmes plages de contactage P2 sont raccordées à une même sortie S1-S7 du microcontrôleur 2.

Ainsi, l'ensemble de commandes de la figure 2 comporte sept séries :
- une première série I1 comportant trois commutateurs A1, B1, C1 dont les premières plages de contactage P1 sont respectivement raccordées à trois entrées distinctes EA, EB, EC du microcontrôleur 2 et les deuxièmes plages de contactage P2 sont raccordées à une même sortie S1 du microcontrôleur 2,
- une deuxième série 12 de commutateurs A2, C2 dont les premières plages de contactage P1 sont respectivement raccordées à deux entrées distinctes EA, EC du microcontrôleur 2 et les deuxièmes plages de contactage P2 sont raccordées à une même sortie S2 du microcontrôleur 2,
- une troisième série 13 de commutateurs A3, C3 dont les premières plages de contactage P1 sont respectivement raccordées à deux entrées distinctes EA, EC du microcontrôleur 2 et les deuxièmes plages de contactage P2 sont raccordées à une même sortie S3 du microcontrôleur 2,
- une quatrième série 14 de commutateurs A4, C4 dont les premières plages de contactage P1 sont respectivement raccordées à deux entrées distinctes EA, EC du microcontrôleur 2 et les deuxièmes plages de contactage P2 sont raccordées à une même sortie S4 du microcontrôleur 2,
- une cinquième série 15 de commutateurs comportant trois commutateurs A5, B5, C5 dont les premières plages de contactage P1 sont respectivement raccordées à trois entrées distinctes EA, EB, EC du microcontrôleur 2 et les deuxièmes plages de contactage P2 sont raccordées à une même sortie S5 du microcontrôleur 2,
- une sixième série 16 de commutateurs, comportant deux commutateurs A6, C6 dont les premières plages de contactage P1 sont respectivement raccordées à deux entrées distinctes EA, EC du microcontrôleur 2 et les deuxièmes plages de contactage P2 sont raccordées à une même sortie S6 du microcontrôleur 2, et
- une septième série 17 comportant un commutateur A7 dont la première plage de contactage P1 est raccordée à l'entrée EA du microcontrôleur 2 et la deuxième plage de contactage P2 est raccordée à la sortie S7 du microcontrôleur 2.

Mieux visible sur un exemple illustré en figures 3a et 3b, le commutateur, tel que le commutateur A1, peut prendre un état de commutation fermé (figure 3a) dans lequel les plages de contactage P1, P2 sont connectées entre elles par un moyen de contactage 4a mobile et un état de commutation ouvert (figure 3b) dans lequel le moyen de contactage 4a est à l'écart des plages de contactage P1, P2 du commutateur A1 alors déconnectées.

En outre, un moyen de contactage mobile 4a, 4b, 4c, 4d, 4f, 4f, 4g est associé à une série I1, I2, I3, I4, I5, I6, I7.

Pour chaque série, la position du moyen de contactage mobile par rapport à un commutateur de la série a des conséquences au moins sur les états de commutations des autres commutateurs de la série.. Ainsi, les moyens de contactage mobiles 4a-4g peuvent prendre plusieurs positions parmi lesquelles au plus une position active de contactage dans laquelle le moyen de contactage mobile 4a-4g connecte deux plages de contactage P1, P2 entre elles de manière à ne fermer qu'un seul commutateur de la série à la fois.

De plus, les moyens de traitement 3 du microcontrôleur 2 sont programmés pour associer des commandes de fonctions antinomiques du véhicule à chaque position pouvant être prise par le moyen de contactage mobile 4a-4g d'une série.

Ainsi dans l'exemple de la figure 2 :
- un premier moyen de contactage mobile 4a est associé à la première série I1 et est apte à connecter les plages de contactage P1, P2 d'un commutateur A1, B1 ou C1 de cette première série I1,
- un deuxième moyen de contactage mobile 4b est associé à la deuxième série 12 et est apte à connecter les plages de contactage P1, P2 d'un commutateur A2 ou C2 de cette deuxième série 12,
- un troisième moyen de contactage mobile 4c est associé à la troisième série 13 et est apte à connecter les plages de contactage P1, P2 d'un commutateur A3 ou C3 de cette troisième série 13,
- un quatrième moyen de contactage mobile 4d est associé à la quatrième série 14 et est apte à connecter les plages de contactage P1, P2 d'un commutateur A4 ou C4 de cette quatrième série 14,
- un cinquième moyen de contactage mobile 4e est associé à la cinquième série 15 et est apte à connecter les plages de contactage P1, P2 d'un commutateur A5, B5 ou C5 de cette cinquième série 15,
- un sixième moyen de contactage mobile 4f est associé à la sixième série 16 et est apte à connecter les plages de contactage P1, P2 d'un commutateur A6 ou C6 de cette sixième série 16, et
- une septième moyen de contactage mobile 4g est associé à la septième série 17 et est apte à connecter les plages de contactage P1, P2 du commutateur A7 de cette septième série 17.

En fonctionnement, le microcontrôleur 2 envoie un signal, tel qu'une impulsion ou un train d'impulsions de courant, à tour de rôle sur chaque sortie S1-S7 et scrute les entrées EA, EB, EC pour chaque signal envoyé afin d'identifier si une ou plusieurs entrées ont reçu un signal correspondant ayant transité dans une manette de commutation M1, M2, ou l'inverse, c'est-à-dire qu'on envoie un signal sur EA, EB, EC (sorties) et on scrute les états sur S1 à S7 (entrées). Le microcontrôleur 2 déduit ensuite à partir des séquences de signaux envoyés et des signaux correspondants reçus, les états de commutation des commutateurs. Puis, le microcontrôleur 2 associe à ces états de commutation, une commande correspondante, par exemple à partir d'une table de correspondance stockée en mémoire et délivre au moins un signal de commande correspondant aux éléments devant être commandés. On lit ainsi par exemple sur les entrées, soit les états de commutation fermé-ouvert-ouvert soit ouvert-fermé-ouvert soit ouvert-ouvert-fermé, pour chaque signal envoyé en sortie.

Les positions pouvant être prises par le moyen de contactage mobile de chaque série correspondent par exemple aux commandes listées dans le tableau ci-dessous (chaque case correspondant à la fermeture d'un commutateur) :

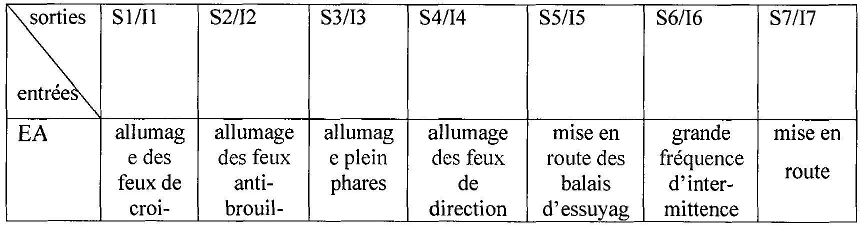

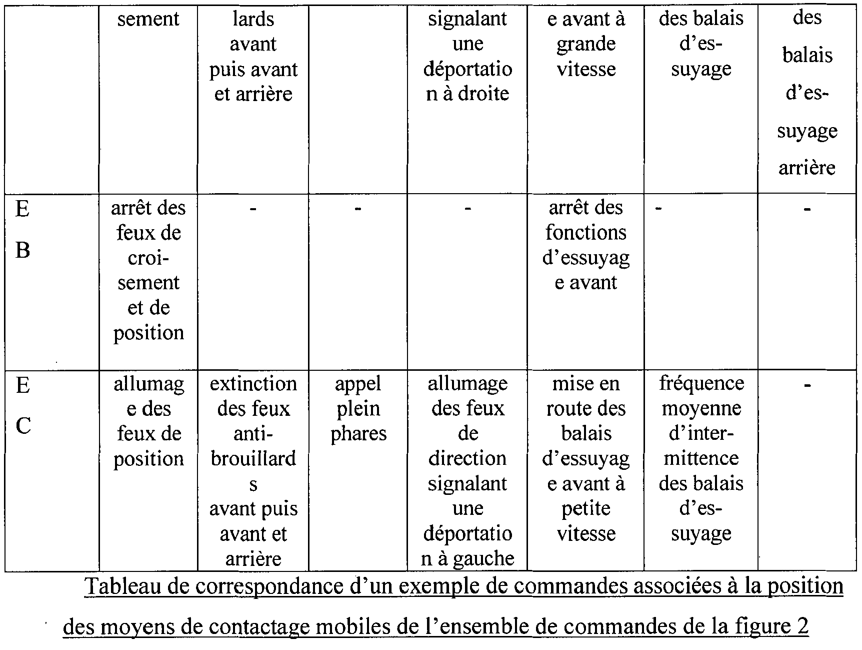

Selon un exemple de réalisation visible sur la figure 1, la première manette de commutation M1 de l'ensemble de commandes comporte deux bagues rotatives, une bague interne BI et une bague externe BE, accessibles à l'utilisateur. Chaque bague rotative BI, BE peut prendre au moins deux positions angulaires différentes.

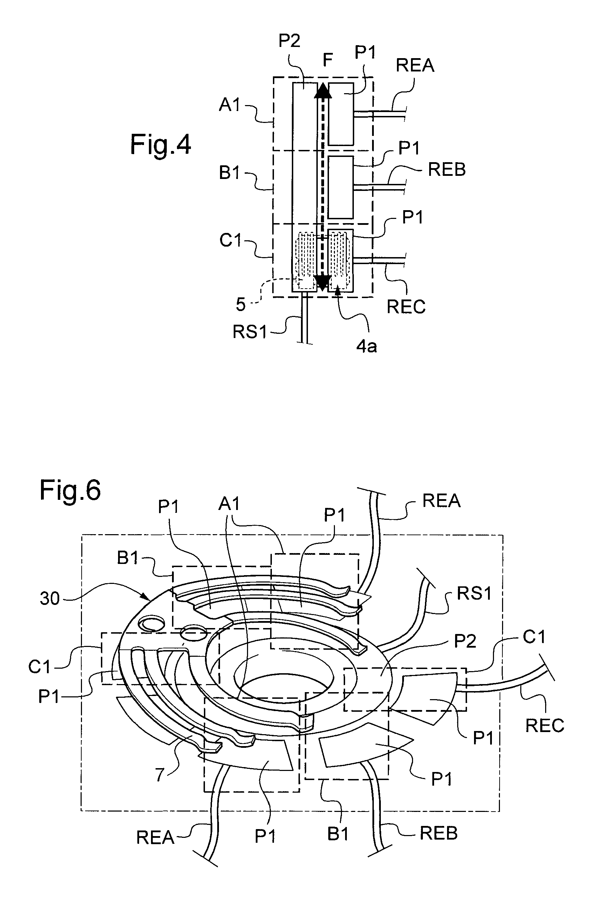

Plus précisément, la bague rotative externe BE peut prendre au moins trois positions angulaires. Le premier moyen de contactage mobile 4a de la première série I1 comporte par exemple un chariot de contactage 5 présentant des éléments conducteurs 6, tels que des lames élastiques métalliques, sollicités en translation sur les plages de contactage P1, P2 des commutateurs A1, B1, C1 respectives (par friction, voir flèches F sur les figures 3a et 4) par entraînement en rotation de la bague rotative externe BE. Selon l'emplacement du chariot de contactage 5, les éléments conducteurs 6 établissent un contact frottant entre les plages de contactage P1, P2 (voir figures 3a, 3b et 4).

En regardant l'exemple de la figure 4, on voit que la position du chariot de contactage 5 sur les plages de contactage P1, P2 du troisième commutateur C1 de la première série I1 implique la déconnection des plages de contactage P1, P2 entre elles, des autres commutateurs B1 et C1 de cette première série I1. Le premier moyen de contactage mobile 4a ne peut donc fermer qu'un seul commutateur A1, B1 et C1 de la première série I1, à la fois.

En outre, les deuxièmes plages de contactage P2 raccordées à une même sortie du microcontrôleur 2 peuvent être portées par une plage de contactage commune (voir figure 4 illustrant un exemple de réalisation des commutateurs de la première série I1 et du premier moyen de contactage mobile 4a).

Le réseau de pistes électriques REA, REB, REC, RS1-RS7 et les plages de contactage P1, P2 peuvent comporter par exemple des inserts métalliques, surmoulés dans un matériau plastique par exemple. On évite ainsi d'utiliser une couteuse et encombrante carte à circuit imprimée.

Dans la première série I1, la fermeture des commutateurs A1, C1, B1 correspond respectivement aux fonctions d'allumage des feux de croisement, d'extinction des feux de croisement et de position, et d'allumage des feux de position.

Ainsi, une unique position peut être prise à la fois par la bague rotative BE de sorte qu'il n'est pas possible d'activer à la fois l'allumage des feux de croisement et l'extinction de ceux-ci, les différentes fonctions associées à la première série I1 étant antinomiques. L'état de commutation des commutateurs A1, C1, B1 de la première série I1 étant modifiable par la position de la bague rotative BE, un seul commutateur de la série I1 peut prendre l'état de commutation fermé à la fois. Ainsi, il n'y a pas d'interférences possibles sur les entrées EA, EB, EC du microcontrôleur 2, le signal envoyé en sortie S1 du microcontrôleur 2 ne peut atteindre qu'une seule entrée puisqu'un seul commutateur de la série I1 ne peut être fermé à la fois. Par conséquent, il n'est pas nécessaire de positionner des diodes entre les commutateurs d'une même série pour empêcher ces interférences.

Selon un exemple de réalisation, comme pour la première série I1, le deuxième moyen de contactage mobile 4b de la deuxième série 12 peut comporter un chariot de contactage 5 présentant des éléments conducteurs 6 sollicités en translation sur les plages de contactage P1, P2 des commutateurs A2, C2, respectifs par entraînement en rotation de la bague rotative interne BI. La bague rotative interne BI peut prendre au moins trois positions angulaires dont deux positions instables et une troisième position stable, c'est-à-dire que la bague rotative interne BI comporte des moyens de rappel des deux positions instables vers la troisième position stable. En outre, les moyens de traitement 3 du microcontrôleur 2 sont configurés pour mémoriser le nombre de fois où la bague rotative interne BI a été tournée successivement vers la même position instable.

Dans la deuxième série 12, la fermeture du commutateur A2 correspond aux fonctions d'allumage des feux antibrouillard avant et d'allumage des feux antibrouillard avant et arrière et la fermeture du commutateur C2 correspond aux fonctions d'extinction des feux antibrouillard avant et d'extinction des feux antibrouillard avant et arrière. Concrètement, la rotation dans un premier sens de la bague interne BI correspond à la fonction d'allumage des feux antibrouillard avant et une deuxième rotation successive dans le même sens correspond à la fonction d'allumage des feux antibrouillard avant et arrière.

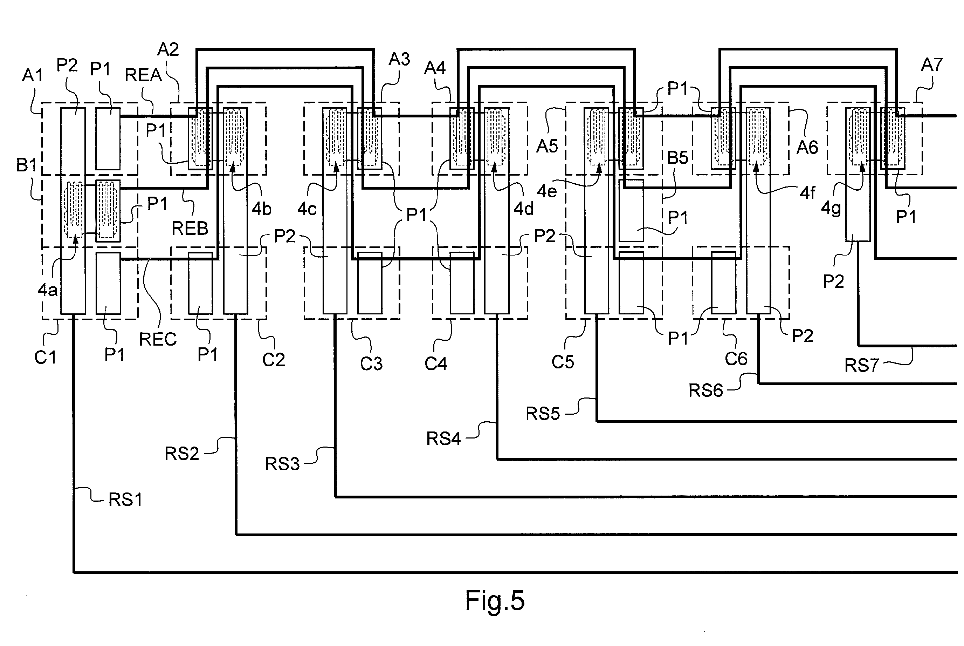

En outre, et toujours selon l'exemple de réalisation de la figure 2, les moyens de contactage mobiles 4c, 4d, 4e, 4f et 4g des cinq autres séries 13, 14, 15, 16 et 17 comportent respectivement un chariot de contactage 6 présentant des éléments conducteurs 5 sollicités en translation sur les plages de contactage P1, P2 des commutateurs respectifs par entraînement en pivotement d'un levier de la manette de commutation M1 (voir figure 5).

Ainsi, la première manette de commutation M1 peut par exemple pivoter dans une première direction vers le conducteur et dans une deuxième direction, opposée à la première direction. La fermeture des commutateurs A3, C3 de la troisième série 13 correspond respectivement aux fonctions d'allumage plein phares ou d'appel plein phares. Lorsque l'utilisateur pivote le levier de la manette de commutation vers lui, il déplace le chariot de contactage 5 sur les plages de contactage P1, P2, connectant les première et deuxième plages de contactage P1, P2 du commutateur A3 de manière à commander l'allumage plein phares.

De même, l'utilisateur peut pivoter le levier de la manette de commutation dans la deuxième direction opposée fermant le commutateur C3 pour faire un appel de phares. Le levier de commande présente en outre des moyens de rappel en position centrale de repos.

La première manette de commutation M1 peut par exemple pivoter dans une troisième direction vers le haut du volant et dans une deuxième direction, opposée à la première direction vers le bas du volant. La fermeture des commutateurs A4, C4 de la quatrième série 14 correspond par exemple respectivement aux fonctions d'allumage des feux de direction signalant une déportation à droite et d'allumage des feux de direction signalant une déportation à gauche. Lorsque l'utilisateur pivote le levier de la manette de commutation vers le haut, il ferme le commutateur A4 allumant le clignotant droit et lorsqu'il pivote le levier de la manette de commutation M1 vers le bas, il allume le clignotant gauche.

La deuxième manette de commutation M2 peut pivoter de haut en bas selon au moins trois positions de pivotement distinctes. Chaque position pouvant être prise par le levier de la deuxième manette de commutation M2 permet de modifier les états de commutation des commutateurs A5, B5, C5 de la cinquième série 15. La fermeture des commutateurs A5, B5, C5 correspond par exemple respectivement aux fonctions de mise en route des balais d'essuyage avant à grande vitesse, d'arrêt des fonctions d'essuyage avant, de mise en route des balais d'essuyage avant à petite vitesse.

La deuxième manette de commutation M2 peut pivoter selon deux positions de pivotement distinctes, vers l'utilisateur et dans la direction opposée. Chaque position pouvant être prise par le levier de la deuxième manette de commutation M2 permet de modifier les états de commutation des commutateurs A6, C6 de la sixième série 16. La fermeture respective des commutateurs A6, C6 permet par exemple de choisir la fréquence d'intermittence des balais d'essuyage.

Enfin, la deuxième manette de commutation M2 peut pivoter vers une troisième position de pivotement vers l'utilisateur pour modifier l'état de commutation du commutateur A7 de la septième série 17 permettant la mise en route de l'essuyage arrière.

Selon un deuxième exemple de réalisation des commutateurs d'une série, tel que les trois commutateurs A1, B1, C1 d'une série représentée en figure 6, dont les premières plages de contactage P1 sont respectivement raccordées à trois entrées distinctes EA, EB, EC du microcontrôleur 2 par les pistes d'entrées REA, REB, REC et les deuxièmes plages de contactage P2 sont raccordées à une même sortie S1 du microcontrôleur 2 par une piste de sortie RS1, le moyen de contactage mobile 30 de la série comporte une fourche rotative conductrice 7 sollicitée en rotation sur les plages de contactage P1, P2. Dans ce cas, les plages de contactage P1, P2 sont disposées en cercle.

En outre, dans cet exemple, les plages de contactage P1, P2 de chaque commutateur A1, B1, C1 sont doublées. Chaque commutateur A1, B1, C1 comporte ainsi deux premières plages de contactage P1 respectivement raccordées à une même entrée EA, EB, EC et deux deuxièmes plages de contactage P2 raccordées ensemble à une même sortie S1.

Enfin, selon encore un autre exemple de réalisation non représenté, le moyen de contactage mobile comporte au moins un élément conducteur sollicité sensiblement à l'aplomb des plages de contactage.

On constate donc que pour chaque série I1, 12, 13, 14, 15, 16, 17, un seul commutateur ne peut être connecté à la fois. Ainsi, par exemple dans l'état initial des figures 2 et 5, le deuxième commutateur B1 de la première série I1 est fermé, les autres commutateurs A1, C1 sont donc ouverts. Dans la série 12, le premier commutateur A2 est fermé, le deuxième commutateur C2 est donc ouvert. De même, on constate qu'un seul commutateur par série : A3, A4, A5, A6 et A7 des séries correspondantes I3, I4, I5, I6, 17 est fermé. Les feux de croisement et de position sont donc éteints, les feux antibrouillard avant au moins sont allumés, le clignotant droit est allumé, les balais d'essuyage sont en route à grande vitesse, la fréquence d'intermittence étant réglée au maximum et les balais d'essuyage arrière étant également en fonctionnement.

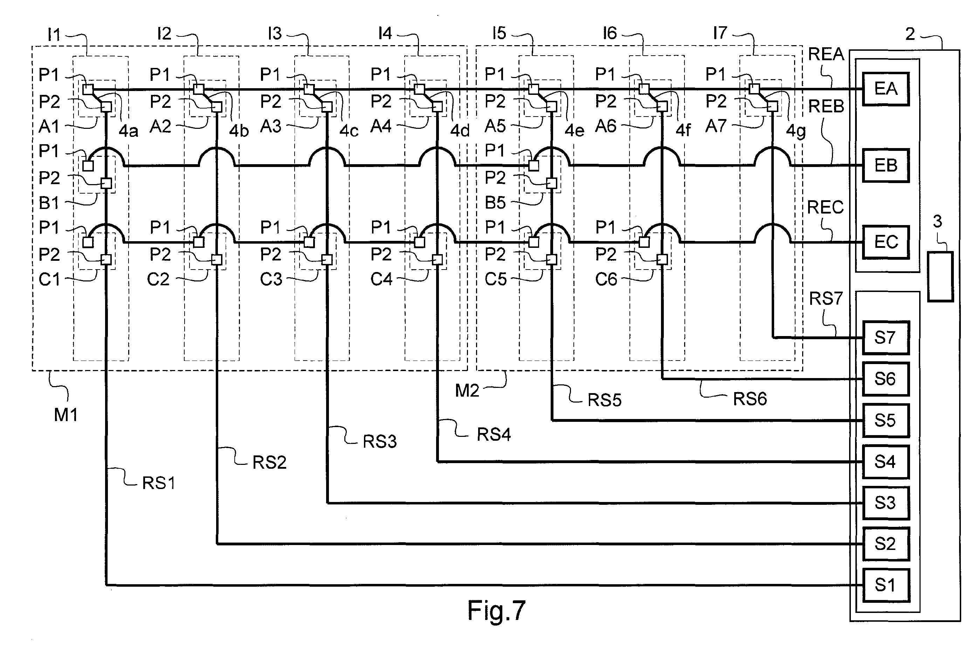

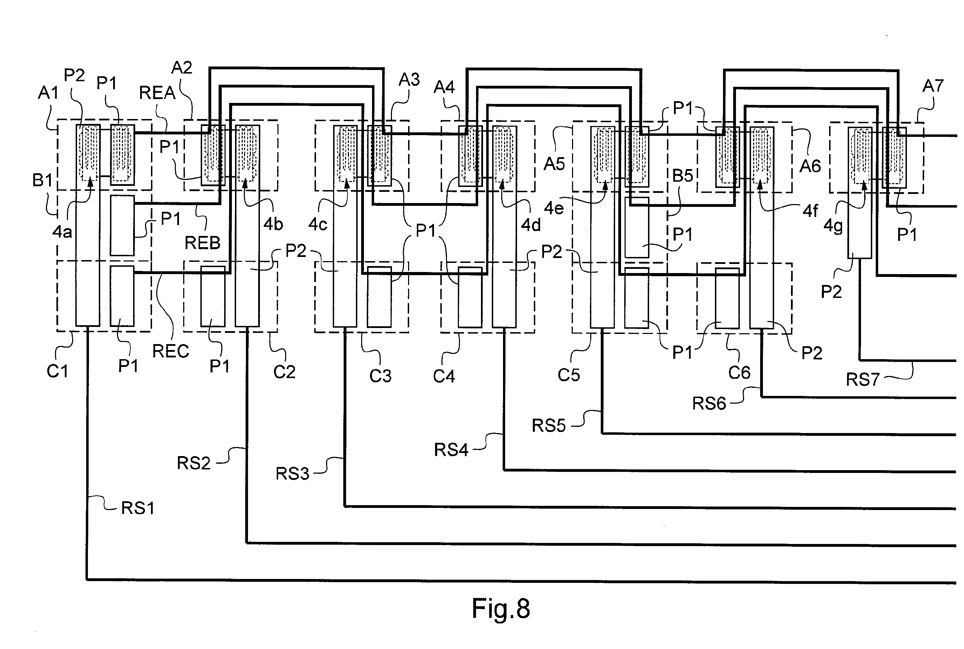

Lorsque l'utilisateur tourne la bague rotative externe BE de la manette de commutation M1, celle-ci entraîne le déplacement du chariot de contactage 5 de la première série I1, des plages de contactage P1, P2 du deuxième commutateur B1 vers les plages de contactage P1, P2 du premier commutateur A1. L'état de commutation du deuxième commutateur B1 devient ouvert tandis que l'état de commutation du premier commutateur A1 devient fermé (figures 7 et 8). On a donc à nouveau un seul commutateur de la première série I1 qui est fermé.

Le microcontrôleur 2 lit les trois entrées EA, EB, EC pour le signal envoyé sur la sortie S1 et déduit de cette information les nouveaux états de commutation des commutateurs A1 et B1. Puis, le microcontrôleur 2 associe aux nouveaux états de commutation, la commande correspondante d'allumage des feux de croisement.

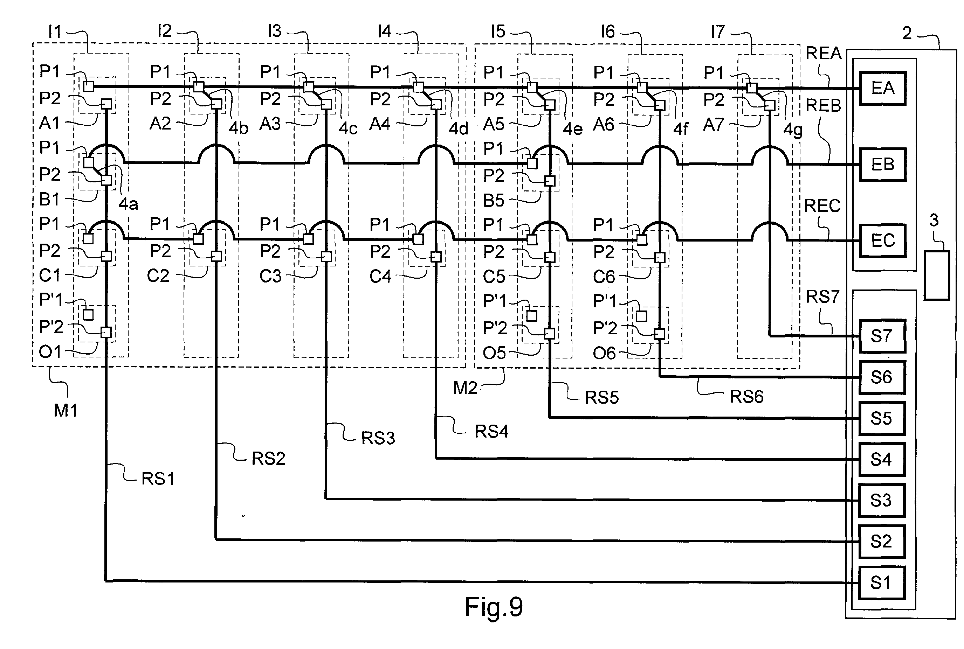

Selon un exemple de réalisation représenté en figure 9, parmi les positions que peuvent prendre le moyen de contactage mobile, des moyens de contactage mobile 4a, 4e et 4f peuvent prendre au plus une position neutre dans laquelle il est déconnecté des premières plages de contactage P1 raccordées à des entrées EA, EB, EC du microcontrôleur 2.

Dans la position neutre, le moyen de contactage mobile n'est pas connecté à une entrée du microcontrôleur 2 de sorte qu'aucune information électrique ne peut être lue. En revanche, une information peut être déduite du microcontrôleur 2 de ce manque d'information électrique. N'ayant aucun retour du signal envoyé en sortie, le microcontrôleur 2 déduit que le moyen de contactage mobile 4a, 4e ou 4f a pris la position neutre. Pour que cette déduction soit possible, chaque série ne peut présenter au maximum qu'un seul commutateur supplémentaire non connecté à une entrée du microcontrôleur.

En outre, l'ensemble de commandes peut comporter un commutateur supplémentaire O1, 05, 06 dont les plages de contactage supplémentaires P' 1, P'2 peuvent être contactées par le moyen de contactage mobile respectif 4a, 4e, 4f dans la position neutre, les premières plages de contactage supplémentaires P'1 au moins étant à un potentiel flottant.

Ainsi, on voit sur l'exemple de la figure 9 que les premières plages de contactage supplémentaires P'1 des commutateurs supplémentaires O1, 05, 06 ne sont pas raccordées à une entrée du microcontrôleur 2, mais sont à un potentiel flottant. I1 pourrait en être de même pour les deuxièmes plages de contactage supplémentaires P'2.

Les moyens de contactage mobile 4a, 4e, 4f ne peuvent donc fermer qu'un seul commutateur parmi les commutateurs et les commutateurs supplémentaires O1, 05, 06 de chaque série I1, I5, I6, à la fois. Ainsi :
- le premier moyen de contactage mobile 4a de la première série I1 ne peut fermer qu'un seul commutateur A1, B1, C1 ou O1 de la première série I1, à la fois,
- le cinquième moyen de contactage mobile 4e de la cinquième série 15 ne peut fermer qu'un seul commutateur A5, B5, C5 ou 05 de la cinquième série 15, à la fois, et
- le sixième moyen de contactage mobile 4f de la sixième série 16 ne peut fermer qu'un seul commutateur A6, C6, C6 ou 06 de la sixième série 16, à la fois.

L'utilisation de commutateurs supplémentaires permet simplement de ne pas abîmer le moyen de contactage mobile déplacé en friction par exemple à leur encontre mais n'ont aucune fonction électrique.

En outre, on prévoit que dans une série, les moyens de traitement 3 du microcontrôleur 2 soient programmés pour associer une fonction de sécurité de mise en route minimale d'organes du véhicule lorsqu'aucun signal n'est reçu sur les entrées alors qu'un signal est envoyé en sortie, ce qui correspond soit au cas où le moyen de contactage mobile est en position neutre, soit à une défaillance dans le réseau de pistes électrique du à une rupture d'une liaison électrique reliant le microcontrôleur.

On économise ainsi une entrée du microcontrôleur 2 et l'ensemble de commandes dispose d'un moyen de sécurité en cas de défaillance de l'ensemble de commandes provoquée par une coupure d'une piste électrique du réseau, cette défaillance entraînant que le signal électrique envoyé en sortie ne puisse plus transiter jusqu'à une entrée du microcontrôleur. Dans ce cas, l'ensemble de commandes continue à interpréter que le moyen de contactage mobile a pris la position neutre, c'est-à-dire connectée au commutateur supplémentaire de la sortie sur laquelle le signal a été envoyé. On associe donc des fonctions de sécurité à cette position neutre.

Par exemple, dans la première série I1 destinée à la commande des feux du véhicule, la fonction pouvant être prise dans la position neutre du moyen de contactage mobile 4a de la série I1, correspond à une commande de mise en route automatique de l'allumage des feux de croisement.

Dans la cinquième série 15 destinée à la commande des balais d'essuyage avant du véhicule, la fonction pouvant être prise dans la position neutre du moyen de contactage mobile 4e de la série 15, correspond à une commande de mise en route automatique des balais d'essuyage.

Et, dans la sixième série 16 destinée à la commande de la fréquence d'intermittence des balais d'essuyage du véhicule, la fonction pouvant être prise dans la position neutre du moyen de contactage mobile 4f de la série 16 correspond à la commande d'une fréquence minimale d'intermittence.

Les positions pouvant être prises par le moyen de contactage mobile de chaque série correspondent aux commandes par exemple résumées dans le tableau ci-dessous (chaque case correspondant à la fermeture d'un commutateur) :

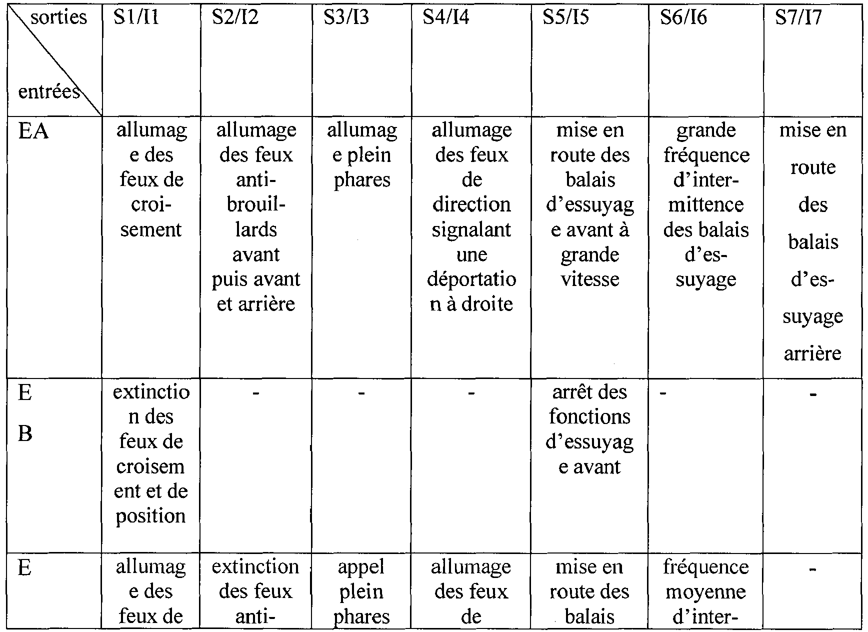

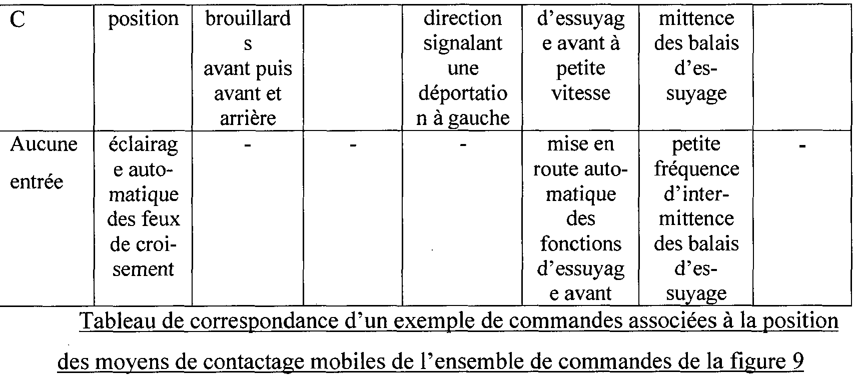

Ainsi, en cas de défaillance des pistes électriques de sortie RS1, le capteur de lumière du véhicule détecte s'il est nécessaire d'allumer les feux de croisement. On assure alors que les feux de croisement restent allumés si nécessaire, même en cas de panne.

En outre, le contactage du commutateur supplémentaire 05 par le moyen de contactage mobile 4e correspond par exemple à la mise en route d'une fonction minimale d'essuyage avant, comme l'essuyage par intermittence, la fréquence de l'intermittence étant par exemple déterminée par un capteur de pluie ou par les états de commutation de la sixième série 16. On s'assure ainsi qu'en cas de panne, le pare-brise du véhicule soit quand même systématiquement balayé.

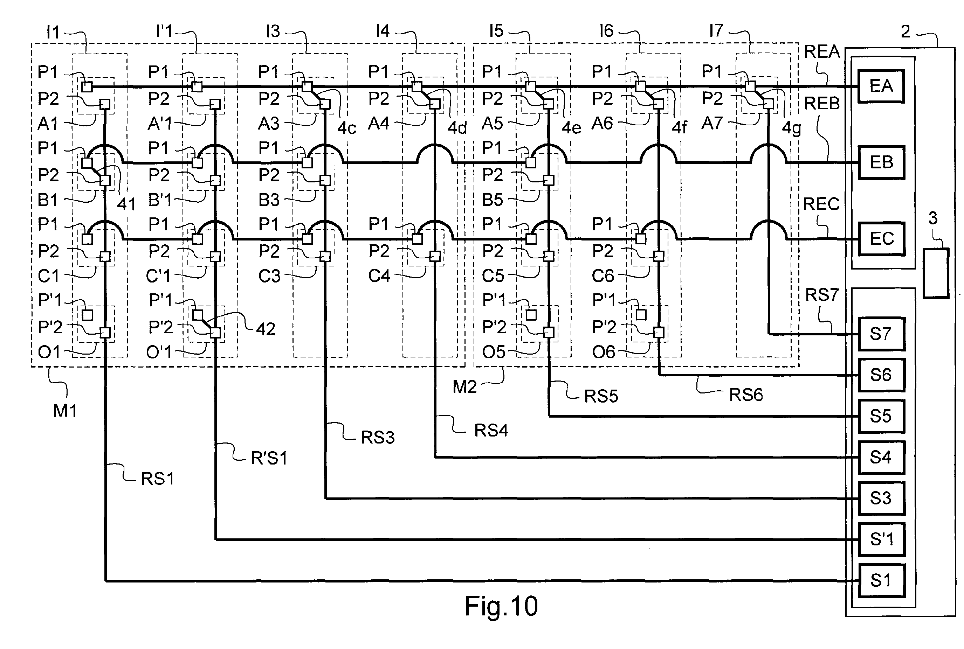

Selon un troisième exemple de réalisation visible sur la figure 10, un premier moyen de contactage mobile 41 associé à une première série I1 est couplé au déplacement d'un moyen de contactage mobile doublon 42, associé à une série doublon I'1.

La première série I1 et la série doublon I'1 sont destinées à la commande des mêmes fonctions. Dans l'exemple de réalisation illustré en figure 10, la première série I1 et la série doublon I'1 sont destinées à la commande des feux de croisement.

La première série I1 comporte d'une part, trois commutateurs A1, B1, C1 dont les premières plages de contactage P1 sont respectivement raccordées aux trois entrées distinctes EA, EB, EC et dont les deuxièmes plages de contactage P2 sont raccordées à la première sortie S1 et d'autre part, un commutateur supplémentaire O1 raccordé à la première sortie S1.

La série doublon I'1 couplée à la première série I1 comporte d'une part, trois commutateurs A'1, B'1, C'1 dont les premières plages de contactage P1 sont respectivement raccordées aux trois entrées distinctes EA, EB, EC et dont les deuxièmes plages de contactage P2 sont raccordées à la première sortie S'1 et d'autre part, un commutateur supplémentaire O'1 raccordé à la première sortie S'1.

Le premier moyen de contactage mobile 41 et le moyen de contactage mobile doublon 42 peuvent connecter simultanément les plages de contactage P1, P2, P'1, P'2 d'un commutateur A1, B1, C1, O1 de la première série Il et d'un commutateur A'1, B'1, C' 1, O'1 de la série doublon I'1, les commutateurs étant raccordés à des entrées distinctes.

Ainsi, le premier moyen de contactage mobile 41 et le moyen de contactage mobile doublon 42 sont par exemple configurés pour connecter :
- les plages de contactage P1, P2 du premier commutateur A1 de la première série I1 simultanément aux plages de contactage P1, P2 du troisième commutateur C'1 de la série doublon I'1,
- les plages de contactage P1, P2 du deuxième commutateur B1 simultanément à aux plages de contactage P'1, P'2 du commutateur supplémentaire O'1 de la série doublon I'1,
- les plages de contactage P1, P2 du troisième commutateur C1 simultanément aux plages de contactage P1, P2 du deuxième commutateur B'1 de la série doublon I'1, et
- les plages de contactage P1, P2 du commutateur supplémentaire O1 de la première série I1 simultanément aux plages de contactage P1, P2 du premier commutateur A'1 de la série doublon I'1.

Pour cela, les moyens de contactage mobile 41 et 42 sont par exemple rotatifs, et présentent des éléments conducteurs angulairement décalés et sollicités à l'encontre de plages de contactage P1, P2, disposées en cercle, de manière à boucler le décalage entre les commutateurs associés aux mêmes fonctions.

Les positions pouvant être prises par les moyens de contactage mobile 41, 42 correspondent par exemple aux commandes listées dans le tableau ci-dessous (chaque case correspondant à la fermeture d'un commutateur) :

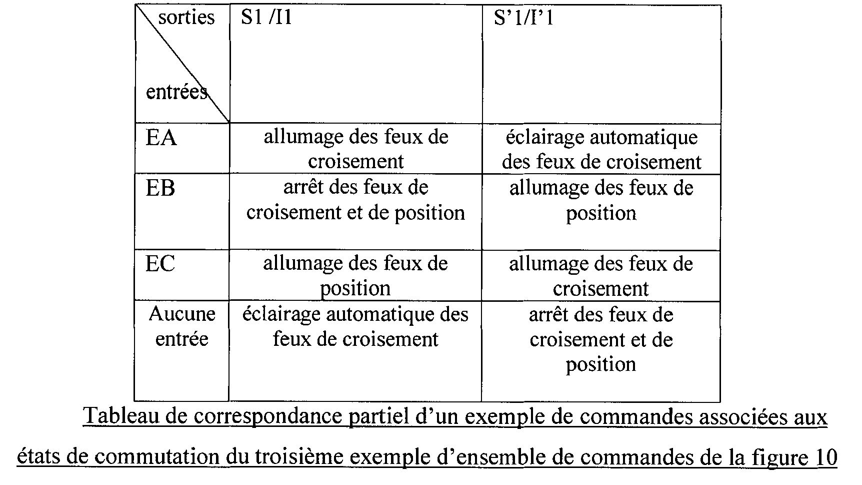

Ainsi, l'ensemble de commandes comporte un moyen de sécurité supplémentaire car le microcontrôleur 2 peut vérifier la correspondance des signaux reçus ayant transité par :
- le commutateur A1 et le commutateur C1',
- le commutateur B1 et l'absence d'information en position neutre du moyen de contactage mobile 42 de la série couplée I'1,
- le commutateur C1 et le commutateur B'1, et
- l'absence d'information en position neutre du moyen de contactage mobile 41 de la première série I1 et le commutateur A'1.

Les mêmes fonctions étant dédoublées sur deux séries dont les moyens de contactage mobiles 41, 42 sont couplés pour qu'une même fonction soit commandée deux fois simultanément et déduite à partir de signaux reçus sur des entrées différentes du microcontrôleur, permettent de s'assurer qu'il n'y a pas de défaillance sur le réseau de pistes électriques reliant les entrées et les sorties du microcontrôleur aux commutateurs.

On comprend qu'avec un tel ensemble de commandes, l'actionnement des moyens de contactage mobiles par les manettes de commutation est adapté physiquement au raccordement des entrées/sorties du microcontrôleur, faisant ainsi correspondre intelligemment à chaque organe de la manette de commande manoeuvré par l'utilisateur des fonctions antinomiques, ce qui permet de simplifier les raccordements électriques en n'utilisant plus de diodes et de limiter la taille de la carte à circuit imprimé dans l'ensemble de commandes, voire même de ne plus utiliser du tout de carte à circuit imprimé dans le support central de l'ensemble de commandes lorsque le microcontrôleur est déporté par exemple dans la planche de bord.

## Revendications

1. Ensemble de commandes pour haut de colonne de direction de véhicule automobile comportant :
- un microcontrôleur (2) présentant au moins deux entrées (EA, EB, EC) et au moins deux sorties (S1, S2, S3, S4, S5, S6, S7 ; S'1),
- un nombre prédéfini de commutateurs (A1, A2, A3, A4, A5, A6, A7, B1, B5, C1, C2, C3, C4, C5, C6) comportant chacun au moins une première et au moins une deuxième plages de contactage (P1, P2), et pouvant prendre un état de commutation fermé dans lequel les plages de contactage (P1, P2) sont connectées entre elles par un moyen de contactage mobile (4a, 4b, 4c, 4d, 4e, 4f, 4g ; 30 ;41, 42) de l'ensemble de commandes et un état de commutation ouvert dans lequel les plages de contactage (P1, P2) sont déconnectées, le microcontrôleur (2) comportant des moyens de traitement (3) pour commander des fonctions du véhicule selon les états de commutation des commutateurs,
- un réseau de pistes électriques comportant des pistes d'entrée (REA, REA, REC) raccordant les premières plages de contactage (P1) des commutateurs à une entrée (EA, EB, EC) du microcontrôleur (2) et des pistes de sorties (RS1, RS2, RS3, RS4, RS5, RS6, RS7; RS'1) raccordant les deuxièmes plages de contactage (P2) des commutateurs à une sortie du microcontrôleur (2), **caractérisé en ce que** :
- un moyen de contactage mobile (4a, 4b, 4c, 4d, 4e, 4f, 4g ; 30 ;41, 42) est associé à une série (I1, 12, 13, 14, 15, 16, 17 ; I'1) comportant un ensemble de commutateurs dont les premières plages de contactage (P1) sont respectivement raccordées à des entrées (EA, EB, EC) distinctes du microcontrôleur (2) et dont les deuxième plages de contactage (P2) sont raccordées à une même sortie (S1, S2, S3, S4, S5, S6, S7; S'1) du microcontrôleur (2), **en ce que**
- pour chaque série (I1, 12, 13, 14, 15, 16, I7 ; I'1), le moyen de contactage mobile associé (4a, 4b, 4c, 4d, 4e, 4f, 4g ; 30 ;41, 42) peut prendre plusieurs positions parmi lesquelles au plus une position active de contactage à la fois dans laquelle le moyen de contactage mobile connecte deux plages de contactage (P1, P2) entre elles de manière à ne fermer qu'un seul commutateur de la série à la fois, et **en ce que**
- les moyens de traitement (3) du microcontrôleur (2) sont programmés pour associer des commandes de fonctions antinomiques du véhicule à chaque position pouvant être prise par le moyen de contactage mobile d'une série.

2. Ensemble de commandes selon la revendication 1, **caractérisé en ce qu'**une série (I1) est destinée à la commande des feux du véhicule et **en ce que** la position active de contactage pouvant être prise par le moyen de contactage mobile (4a) de ladite série (I1) destinée à la commande des feux du véhicule, correspond soit à la commande d'allumage des feux de croisement, soit à la commande d'allumage des feux de position, soit à la commande d'extinction des feux de croisement et de position, soit à la commande de mise en route automatique des feux de croisement

3. Ensemble de commandes selon l'une des revendications 1 ou 2, **caractérisé en ce qu'**une série (12) est destinée à la commande des feux antibrouillard du véhicule et **en ce que** la position active de contactage pouvant être prise par le moyen de contactage mobile (4b) de ladite série (12) destinée à la commande des feux antibrouillard du véhicule, correspond soit à la commande d'allumage des feux antibrouillard avant, soit à la commande d'allumage des feux antibrouillard avant et arrière, soit à la commande d'extinction des feux antibrouillard avant, soit à la commande d'extinction des feux antibrouillard avant et arrière.

4. Ensemble de commandes selon l'une des revendications 1 à 4, **caractérisé en ce qu'**une série (13) est destinée à la commande des phares du véhicule et **en ce que** la position active de contactage pouvant être prise par le moyen de contactage mobile (4c) de ladite série (13) destinée à la commande des phares du véhicule, correspond soit à la commande plein phares, soit à la commande d'appel plein phares.

5. Ensemble de commandes selon l'une des revendications 1 à 5, **caractérisé en ce qu'**une série (14) est destinée à la commande des feux de direction du véhicule et **en ce que** la position active de contactage pouvant être prise par le moyen de contactage mobile (4d) de ladite série (14) destinée à la commande des feux de direction du véhicule, correspond soit à la commande d'allumage des feux de direction signalant une déportation à droite, soit à la commande d'allumage des feux de direction signalant une déportation à gauche.

6. Ensemble de commandes selon l'une des revendications 1 à 6, **caractérisé en ce qu'**une série (15) est destinée à la commande des balais d'essuyage avant du véhicule et **en ce que** la position active de contactage pouvant être prise par le moyen de contactage mobile (4e) de ladite série (15) destinée à la commande des balais d'essuyage avant du véhicule, correspond soit à la commande de la mise en route des balais d'essuyage avant à grande vitesse, soit à la commande la mise en route des balais d'essuyage avant à petite vitesse, soit à la commande de la mise en route des balais d'essuyage par intermittence, soit à la commande d'arrêt des fonctions d'essuyage avant, soit à la commande de mise en route automatique des balais d'essuyage.

7. Ensemble de commandes selon à la revendication 6, **caractérisé en ce qu'**une série (16) est destinée à la commande de la fréquence d'intermittence des balais d'essuyage du véhicule et **en ce que** la position active de contactage pouvant être prise par le moyen de contactage mobile (4f) de ladite série (16) destinée à la commande de la fréquence d'intermittence des balais d'essuyage du véhicule, correspond à une commande de fréquence d'intermittence distincte des balais d'essuyage.

8. Ensemble de commandes selon l'une des revendications 1 à 7, **caractérisé en ce qu'**une série (17) est destinée à la commande de l'essuyage de la vitre arrière du véhicule et **en ce que** la position active de contactage pouvant être prise par le moyen de contactage mobile (4e) de ladite série (17) destinée à la commande de l'essuyage de la vitre arrière du véhicule, correspond soit à la mise en route de l'essuyage de la vitre arrière du véhicule, soit à la mise en route du lavage et de l'essuyage de la vitre arrière du véhicule, soit à l'arrêt des fonctions de lavage et d'essuyage arrière.

9. Ensemble de commandes selon l'une des revendications 1 à 8, **caractérisé en ce qu'**au moins un moyen de contactage mobile (4a, 4b, 4c, 4d, 4e, 4f, 4g) d'une série (I1, I2, I3, I4, I5, I6, I7) comporte un chariot de contactage (6) présentant au moins un élément conducteur (5) sollicité en translation sur les plages de contactage (P1, P2).

10. Ensemble de commandes selon l'une des revendications 1 à 9, **caractérisé en ce qu'**au moins un moyen de contactage mobile (30) d'une série comporte une fourche rotative conductrice (7) sollicitée en rotation sur les plages de contactage (P1, P2).

11. Ensemble de commandes selon l'une des revendications 1 à 10, **caractérisé en ce qu'**au moins un moyen de contactage mobile d'une série comporte au moins un élément conducteur sollicité sensiblement à l'aplomb des plages de contactage.

12. Ensemble de commandes selon l'une des revendications 1 à 11, **caractérisé en ce que** les deuxièmes plages de contactage (P2) raccordées à une même sortie du microcontrôleur (2) sont portées par une plage de contactage commune.

13. Ensemble de commandes selon l'une des revendications précédentes, **caractérisé en ce que** ledit réseau de pistes électriques (REA, REB, REC, RS1-RS7) et lesdites plages de contactage (P1, P2) comportent des inserts métalliques surmoulés.

14. Ensemble de commandes selon l'une des revendications 1 à 13, **caractérisé en ce que** ledit moyen de contactage mobile est entraîné en translation sur les plages de contactage (P1, P2) par la rotation d'une bague (BI, BE) d'une manette de commutation (M1, M2) de l'ensemble de commandes.

15. Ensemble de commandes selon l'une des revendications 1 à 14, **caractérisé en ce que** ledit moyen de contactage mobile est entraîné en translation sur les plages de contactage (P1, P2) par le pivotement d'un levier d'une manette de commutation (M1, M2) de l'ensemble de commandes.

16. Ensemble de commandes selon l'une des revendications précédentes, **caractérisé en ce que** parmi les positions que peut prendre ledit moyen de contactage mobile (4a, 4e, 4f; 30), ledit moyen de contactage mobile peut prendre au plus une position neutre dans laquelle il est déconnecté des entrées (EA, EB, EC) du microcontrôleur (2).

17. Ensemble de commandes selon la revendication 16, **caractérisé en ce qu'**il comporte au moins un commutateur supplémentaire (O1, 05, 06) comportant des plages de contactage supplémentaires (P'1, P'2) pouvant être contactées par le moyen de contactage mobile (4a, 4e, 4f; 41) dans la position neutre, les premières plages de contactage supplémentaires (P'1) au moins étant à un potentiel flottant.

18. Ensemble de commandes selon l'une des revendications 16 ou 17, **caractérisé en ce que** dans une série (I1, 15, I6 ; I'1), les moyens de traitement (3) du microcontrôleur (2) sont programmés pour associer une fonction de sécurité de mise en route minimale d'organes du véhicule lorsqu'aucun signal n'est reçu sur les entrées alors qu'un signal est envoyé en sortie.

19. Ensemble de commandes selon la revendication 18, prise ensemble avec la revendication 2, **caractérisé en ce que** dans la série (I1) destinée à la commande des feux du véhicule, la fonction pouvant être prise dans la position neutre du moyen de contactage mobile (4a) de la série (I1), correspond à une commande de mise en route automatique des feux de croisement.

20. Ensemble de commandes selon l'une des revendications 18 ou 19, prise ensemble avec la revendication 6, **caractérisé en ce que** dans la série (15) destinée à la commande des balais d'essuyage avant du véhicule, la fonction pouvant être prise dans la position neutre du moyen de contactage mobile (4e) de la série (15), correspond à une commande de mise en route automatique des balais d'essuyage avant.

21. Ensemble de commandes selon l'une des revendications 18 à 20, prise ensemble avec la revendication 7, **caractérisé en ce que** dans la série (17) destinée à la commande de la fréquence d'intermittence des balais d'essuyage du véhicule, la fonction pouvant être prise dans la position neutre du moyen de contactage mobile (4f) de la série (16) correspond à la commande d'une fréquence minimale d'intermittence.

22. Ensemble de commandes selon l'une des revendications précédentes, **caractérisé en ce qu'**un premier moyen de contactage mobile (41) associé à une première série (I1) est couplé au déplacement d'un moyen de contactage mobile doublon (42) associé à une série doublon (I'1), la première série (I1) et la série doublon (I'1) étant destinées à la commande des mêmes fonctions, le premier moyen de contactage mobile (41) et le moyen de contactage mobile doublon (42) pouvant connecter simultanément les plages de contactage (P1, P2, P'1, P'2) d'un commutateur de la première série (I1) et d'un commutateur de la série doublon (I'1), les commutateurs de la première série (I1) et de la série doublon (I'1) destinés à la commande de la même fonction étant raccordés à des entrées distinctes.

23. Ensemble de commandes selon la revendication 22, **caractérisé en ce que** le premier moyen de contactage mobile (41) et le moyen de contactage mobile doublon (42) sont rotatifs et présentent des éléments conducteurs angulairement décalés et sollicités à l'encontre de plages de contactage (P1, P2) disposées en cercle.

## Patentansprüche

1. Steuerungsgruppe für das obere Ende einer Kraftfahrzeuglenksäule, die Folgendes aufweist:
- einen Mikrocontroller (2), der mindestens zwei Eingänge (EA, EB, EC) und mindestens zwei Ausgänge (S1, S2, S3, S4, S5, S6, S7; S'1) aufweist,
- eine vorbestimmte Anzahl von Umschaltern (A1, A2, A3, A4, A5, A6, A7, B1, B5, C1, C2, C3, C4, C5, C6), die jeweils mindestens einen ersten und einen zweiten Kontaktbereich (P1, P2) aufweisen und einen geschlossenen Schaltzustand einnehmen können, in dem die Kontaktbereiche (P1, P2) miteinander durch ein bewegliches Kontaktmittel (4a, 4b, 4c, 4d, 4e, 4f, 4g; 30; 41, 42) der Steuerungsgruppe verbunden sind, und einen offenen Schaltzustand, in dem die Kontaktbereiche (P1, P2) getrennt sind, wobei der Mikrocontroller (2) Verarbeitungsmittel (3) zum Steuern der Funktionen des Fahrzeugs gemäß den Schaltzuständen der Umschalter aufweist,
- ein Leiterbahnennetz, das Eingangsleiterbahnen (REA, REA, REC) aufweist, die die ersten Kontaktbereiche (P1) der Umschalter mit einem Eingang (EA, EB, EC) des Mikrocontrollers (2) verbinden, und Ausgangsleiterbahnen (RS1, RS2, RS3, RS4, RS5, RS6, RS7; RS'1), die die zweiten Kontaktbereiche (P2) der Umschalter mit einem Ausgang des Mikrocontrollers (2) verbinden,
**dadurch gekennzeichnet, dass**:
- ein bewegliches Kontaktmittel (4a, 4b, 4c, 4d, 4e, 4f, 4g; 30; 41, 42) mit einer Reihe (I1, 12, 13, 14, 15, 16, 17; I'1) verbunden ist, die eine Einheit von Umschaltern aufweist, deren erste Kontaktbereiche (P1) jeweils an getrennte Eingänge (EA, EB, EC), des Mikrocontrollers (2) angeschlossen sind, und deren zweite Kontaktbereiche (P2) an ein und denselben Ausgang (S1, S2, S3, S4, S5, S6, S7; S'1) des Mikrocontrollers (2) angeschlossen sind, und dass
- für jede Reihe (I1, 12, 13, 14, 15, 16, 17; I'1) das dazugehörende bewegliche Kontaktmittel (4a, 4b, 4c, 4d, 4e, 4f, 4g; 30; 41, 42) mehrere Positionen einnehmen kann, darunter maximal eine aktive Kontaktposition auf einmal, in der das bewegliche Kontaktmittel zwei Kontaktbereiche (P1, P2) miteinander derart verbindet, dass nur ein einziger Umschalter der Reihe auf einmal geschlossen wird, und dass
- die Verarbeitungsmittel (3) des Mikrocontrollers (2) programmiert sind, um Steuerungen antinomischer Funktionen des Fahrzeugs mit jeder Position zu assoziieren, die von dem beweglichen Kontaktmittel einer Reihe eingenommen werden kann.

2. Steuerungsgruppe nach Anspruch 1, **dadurch gekennzeichnet, dass** eine Reihe (I1) zum Steuern der Lampen des Fahrzeugs bestimmt ist, und dass die aktive Kontaktposition, die von dem beweglichen Kontaktmittel (4a) der Reihe (I1), die zum Steuern der Lampen des Fahrzeugs bestimmt ist, eingenommen werden kann, entweder der Steuerung des Einschaltens der Abblendlichter oder der Steuerung des Einschaltens der Positionslichter oder der Steuerung des Ausschaltens der Abblend-und Positionslichter oder der Steuerung des automatischen Einschaltens der Abblendlichter entspricht.

3. Steuerungsgruppe nach einem der Ansprüche 1 oder 2, **dadurch gekennzeichnet, dass** eine Reihe (12) zum Steuern der Nebelscheinwerfer des Fahrzeugs bestimmt ist, und dass die aktive Kontaktposition, die von dem beweglichen Kontaktmittel (4b) der Reihe (12), die zum Steuern der Nebelscheinwerfer des Fahrzeugs bestimmt ist, eingenommen werden kann, entweder der Steuerung des Einschaltens der vorderen Nebelscheinwerfer oder der Steuerung des Einschaltens der vorderen und hinteren Nebelscheinwerfer oder der Steuerung des Ausschaltens der vorderen Nebelscheinwerfer oder der Steuerung des Ausschaltens der vorderen und hinteren Nebelscheinwerfer entspricht.

4. Steuerungsgruppe nach einem der Ansprüche 1 bis 4, **dadurch gekennzeichnet, dass** eine Reihe (13) zum Steuern der Scheinwerfer des Fahrzeugs bestimmt ist, und dass die aktive Kontaktposition, die von dem beweglichen Kontaktmittel (4c) der Reihe (13), die zum Steuern der Scheinwerfer des Fahrzeugs bestimmt ist, eingenommen werden kann, entweder dem Steuern des Fernlichts oder dem Steuern der Lichthupe entspricht.

5. Steuerungsgruppe nach einem der Ansprüche 1 bis 5, **dadurch gekennzeichnet, dass** eine Reihe (14) zum Steuern der Fahrtrichtungsanzeiger des Fahrzeugs bestimmt ist, und dass die aktive Kontaktposition, die von dem beweglichen Kontaktmittel (4d) der Reihe (14), die zum Steuern der Fahrtrichtungsanzeiger des Fahrzeugs bestimmt ist, eingenommen werden kann, entweder dem Steuern des Einschaltens der Fahrtrichtungsanzeiger, die eine Verlagerung nach rechts melden, oder dem Steuern des Einschaltens der Fahrtrichtungsanzeiger, die eine Verlagerung nach links melden, entspricht.

6. Steuerungsgruppe nach einem der Ansprüche 1 bis 6, **dadurch gekennzeichnet, dass** eine Reihe (15) zum Steuern der vorderen Scheibenwischer des Fahrzeugs bestimmt ist, und dass die aktive Kontaktposition, die von dem beweglichen Kontaktmittel (4e) der Reihe (15), die zum Steuern der vorderen Scheibenwischer des Fahrzeugs bestimmt ist, eingenommen werden kann, entweder dem Steuern des Einschaltens der vorderen Scheibenwischer mit hoher Geschwindigkeit oder dem Steuern des Einschaltens der vorderen Scheibenwischer mit niedriger Geschwindigkeit oder dem Steuern des intermittierenden Einschaltens der Scheibenwischer oder dem Steuern des Stoppens der vorderen Wischfunktionen oder dem Steuern des automatischen Einschaltens der Scheibenwischer entspricht.

7. Steuerungsgruppe nach Anspruch 6, **dadurch gekennzeichnet, dass** eine Reihe (16) zum Steuern der Intermittenzfrequenz der Scheibenwischer des Fahrzeugs bestimmt ist, und dass die aktive Kontaktposition, die von dem beweglichen Kontaktmittel (4f) der Reihe (16), die zum Steuern der Intermittenzfrequenz der Scheibenwischer des Fahrzeugs bestimmt ist, eingenommen werden kann, einem getrennten Intermittenzfrequenzsteuern der Scheibenwischer entspricht.

8. Steuerungsgruppe nach einem der Ansprüche 1 bis 7, **dadurch gekennzeichnet, dass** eine Reihe (17) zum Steuern des Wischens der Heckscheibe des Fahrzeugs bestimmt ist, und dass die aktive Kontaktposition, die von dem beweglichen Kontaktmittel (4e) der Reihe (17), die zum Steuern des Wischens der Heckscheibe des Fahrzeugs bestimmt ist, eingenommen werden kann, entweder dem Einschalten des Wischens der Heckscheibe des Fahrzeugs oder dem Einschalten des Waschens und des Wischens der Heckscheibe des Fahrzeugs oder dem Stoppen der Heckwasch- und Wischfunktionen entspricht.

9. Steuerungsgruppe nach einem der Ansprüche 1 bis 8, **dadurch gekennzeichnet, dass** mindestens ein bewegliches Kontaktmittel (4a, 4b, 4c, 4d, 4e, 4f, 4g) einer Reihe (I1, 12, 13, 14, 15, 16, 17) einen Kontaktläufer (6) aufweist, der mindestens ein leitendes Element (5), das in Verschiebung auf den Kontaktbereichen (P1, P2) beansprucht wird, aufweist.

10. Steuerungsgruppe nach einem der Ansprüche 1 bis 9, **dadurch gekennzeichnet, dass** mindestens ein bewegliches Kontaktmittel (30) einer Reihe eine leitende Drehgabel (7) aufweist, die in Drehung auf den Kontaktbereichen (P1, P2) beansprucht wird.

11. Steuerungsgruppe nach einem der Ansprüche 1 bis 10, **dadurch gekennzeichnet, dass** mindestens ein bewegliches Kontaktmittel einer Reihe mindestens ein leitendes Element aufweist, das im Wesentlichen in der Lotrechten der Kontaktbereiche beansprucht wird.

12. Steuerungsgruppe nach einem der Ansprüche 1 bis 11, **dadurch gekennzeichnet, dass** die zweiten Kontaktbereiche (P2), die an ein und denselben Ausgang des Mikrocontrollers (2) angeschlossen sind, von einem gemeinsamen Kontaktbereich getragen werden.

13. Steuerungsgruppe nach einem der vorhergehenden Ansprüche, **dadurch gekennzeichnet, dass** das Leiterbahnennetz (REA, REB, REC, RS1-RS7) und die Kontaktbereiche (P1, P2) abgeformte metallische Einsätze aufweisen.

14. Steuerungsgruppe nach einem der Ansprüche 1 bis 13, **dadurch gekennzeichnet, dass** das bewegliche Kontaktmittel in Verschiebung auf den Kontaktbereichen (P1, P2) durch die Drehung eines Rings (BI, BE) eines Betätigungshebels (M1, M2) der Steuerungsgruppe angetrieben wird.

15. Steuerungsgruppe nach einem der Ansprüche 1 bis 14, **dadurch gekennzeichnet, dass** das bewegliche Kontaktmittel in Verschiebung auf den Kontaktbereichen (P1, P2) von dem Schwenken eines Hebels eines Betätigungshebels (M1, M2) der Steuerungsgruppe angetrieben wird.

16. Steuerungsgruppe nach einem der vorhergehenden Ansprüche, **dadurch gekennzeichnet, dass** unter den Positionen, die das bewegliche Kontaktmittel (4a, 4e, 4f; 30) einnehmen kann, das bewegliche Kontaktmittel maximal eine neutrale Position einnehmen kann, in der es von den Eingängen (EA, EB, EC) des Mikrocontrollers (2) getrennt ist.

17. Steuerungsgruppe nach Anspruch 16, **dadurch gekennzeichnet, dass** sie mindestens einen zusätzlichen Umschalter (O1, 05, 06) aufweist, der zusätzliche Kontaktbereiche (P'1, P'2) aufweist, die von dem beweglichen Kontaktmittel (4a, 4e, 4f; 41) in der neutralen Position kontaktiert werden können, wobei mindestens die ersten zusätzlichen Kontaktbereiche (P'1) auf einem schwebenden Potenzial sind.

18. Steuerungsgruppe nach einem der Ansprüche 16 oder 17, **dadurch gekennzeichnet, dass** in einer Reihe (I1, 15, 16; I'1) die Verarbeitungsmittel (3) des Mikrocontrollers (2) programmiert sind, um eine Sicherheitsfunktion zum minimalen Ingangsetzen von Organen des Fahrzeugs zu assoziieren, wenn kein Signal auf den Eingängen empfangen wird, obwohl ein Signal am Ausgang gesendet wird.

19. Steuerungsgruppe nach Anspruch 18, gemeinsam mit Anspruch 2 genommen, **dadurch gekennzeichnet, dass** in der Reihe (I1), die zum Steuern der Lampen des Fahrzeugs bestimmt ist, die Funktion, die in der neutralen Position des beweglichen Kontaktmittels (4a) der Reihe (I1) eingenommen werden kann, einem Steuern des automatischen Einschaltens der Abblendlichter entspricht.

20. Steuerungsgruppe nach einem der Ansprüche 18 oder 19, gemeinsam mit Anspruch 6 genommen, **dadurch gekennzeichnet, dass** in der Reihe (15), die zum Steuern der vorderen Scheibenwischer des Fahrzeugs bestimmt ist, die Funktion, die in der neutralen Position des beweglichen Kontaktmittels (4e) der Reihe (15) eingenommen werden kann, einem Steuern des automatischen Einschaltens der vorderen Scheibenwischer entspricht.

21. Steuerungsgruppe nach einem der Ansprüche 18 bis 20, gemeinsam mit Anspruch 7 genommen, **dadurch gekennzeichnet, dass** in der Reihe (17), die zum Steuern der Intermittenzfrequenz der Scheibenwischer des Fahrzeugs bestimmt ist, die Funktion, die in der neutralen Position des beweglichen Kontaktmittels (4f) der Reihe (16) eingenommen werden kann, der Steuerung einer minimalen Intermittenzfrequenz entspricht.

22. Steuerungsgruppe nach einem der vorhergehenden Ansprüche, **dadurch gekennzeichnet, dass** ein erstes bewegliches Kontaktmittel (41), das mit einer ersten Reihe (I1) assoziiert ist, mit der Bewegung eines beweglichen Doppelungskontaktmittels (42) gekuppelt ist, das mit einer Doppelungsreihe (I'1) assoziiert ist, wobei die erste Reihe (I1) und die Doppelungsreihe (I'1) zum Steuern derselben Funktionen bestimmt sind, wobei das erste bewegliche Kontaktmittel (41) und das bewegliche Doppelungskontaktmittel (42) gleichzeitig die Kontaktbereiche (P1, P2, P'1, P'2) eines Umschalters der ersten Reihe (I1) und eines Umschalters der Doppelungsreihe (I'1) verbinden können, wobei die Umschalter der ersten Reihe (I1) und der Doppelungsreihe (I'1), die zum Steuern derselben Funktion bestimmt sind, an getrennte Eingänge angeschlossen sind.

23. Steuerungsgruppe nach Anspruch 22, **dadurch gekennzeichnet, dass** das erste bewegliche Kontaktmittel (41) und das bewegliche Doppelungskontaktmittel (42) drehend sind und winkelig versetzte leitende Elemente aufweisen, die gegen die Kontaktbereiche (P1, P2), die im Kreis angeordnet sind, beansprucht werden.

## Claims

1. Control assembly for the top of a steering column of an automobile vehicle comprising:
- a microcontroller (2) having at least two inputs (EA, EB, EC) and at least two outputs (S1, S2, S3, S4, S5, S6, S7; S'1),
- a predefined number of switches (A1, A2, A3, A4, A5, A6, A7, B1, B5, C1, C2, C3, C4, C5, C6) each comprising at least one first and at least one second contacting area (P1, P2), and that can take a closed switching state in which the contacting areas (P1, P2) are connected together by a mobile contacting means (4a, 4b, 4c, 4d, 4e, 4f, 4g; 30; 41, 42) of the control assembly and an open switching state in which the contacting areas (P1, P2) are disconnected, the microcontroller (2) comprising processing means (3) for controlling functions of the vehicle according to the switching states of the switches,
- a network of electrical tracks comprising input tracks (REA, REA, REC) connecting the first contacting areas (P1) of the switches to an input (EA, EB, EC) of the microcontroller (2) and output tracks (RS1, RS2, RS3, RS4, RS5, RS6, RS7; RS'1) connecting the second contacting areas (P2) of the switches to an output of the microcontroller (2),
**characterized in that**:
- a mobile contacting means (4a, 4b, 4c, 4d, 4e, 4f, 4g; 30; 41, 42) is associated with a series (I1, 12, 13, 14, I5, 16, 17; I'1) comprising a set of switches whose first contacting areas (P1) are respectively connected to separate inputs (EA, EB, EC) of the microcontroller (2) and whose second contacting areas (P2) are connected to the same output (S1, S2, S3, S4, S5, S6, S7; S'1) of the microcontroller (2), **in that**
- for each series (I1, 12, 13, 14, I5, 16, 17; I'1), the associated mobile contacting means (4a, 4b, 4c, 4d, 4e, 4f, 4g; 30; 41, 42) can take several positions amongst which is, at the most, one active contacting position at a time in which the mobile contacting means connects two contacting areas (P1, P2) together in such a manner as to only close one switch of the series at a time, and **in that**
- the processing means (3) of the microcontroller (2) are programmed so as to associate control commands for antinomic functions of the vehicle with each position that can be taken by the mobile contacting means of a series.

2. Control assembly according to Claim 1, **characterized in that** a series (I1) is designed to control the lights of the vehicle and **in that** the active contacting position that can be taken by the mobile contacting means (4a) of said series (I1), designed to control the lights of the vehicle, corresponds to either the command for switching on the low-beam headlights, or to the command for switching on the position lights, or to the command for extinguishing the low-beam headlights and the position lights, or to the command for automatically switching on the low-beam headlights.

3. Control assembly according to either of Claims 1 and 2, **characterized in that** a series (12) is designed to control the fog lamps of the vehicle and **in that** the active contacting position that can be taken by the mobile contacting means (4b) of said series (12), designed to control the fog lamps of the vehicle, corresponds to either the command for switching on the front fog lamps, or to the command for switching on the front and rear fog lamps, or to the command for extinguishing the front fog lamps, or to the command for extinguishing the front and rear fog lamps.

4. Control assembly according to one of Claims 1 to 4, **characterized in that** a series (13) is designed to control the headlamps of the vehicle and **in that** the active contacting position that can be taken by the mobile contacting means (4c) of said series (13) designed to control the headlamps of the vehicle, corresponds to either the high-beam command, or to the high-beam request command.

5. Control assembly according to one of Claims 1 to 5, **characterized in that** a series (14) is designed to control the direction indicator lights of the vehicle and **in that** the active contacting position that can be taken by the mobile contacting means (4d) of said series (14), designed to control the direction indicator lights of the vehicle, corresponds to either the command for switching on the direction indicator lights indicating a right turn, or to the command for switching on the direction indicator lights indicating a left turn.

6. Control assembly according to one of Claims 1 to 6, **characterized in that** a series (I5) is designed to control the front windshield wipers of the vehicle and **in that** the active contacting position that can be taken by the mobile contacting means (4e) of said series (I5), designed to control the front windshield wipers of the vehicle, corresponds to either the command to activate the front windshield wipers at high speed, or to the command to activate the front windshield wipers at low speed, or to the command to activate the intermittent sweeping of the windshield wipers, or to the command to stop the front windshield wipers functions, or to the command for automatic activation of the windshield wipers.

7. Control assembly according to Claim 6, **characterized in that** a series (16) is designed to control the intermittence frequency of the windshield wipers of the vehicle and **in that** the active contacting position that can be taken by the mobile contacting means (4f) of said series (16), designed to control the intermittence frequency of the windshield wipers of the vehicle, corresponds to a command for a particular intermittence frequency of the windshield wipers.

8. Control assembly according to one of Claims 1 to 7, **characterized in that** a series (17) is designed to control the windshield wipers of the rear windshield of the vehicle and **in that** the active contacting position that can be taken by the mobile contacting means (4e) of said series (17), designed to control the windshield wipers of the rear windshield of the vehicle, corresponds to either the activation of the windshield wipers of the rear windshield of the vehicle, or to the activation of the washer and of the wipers of the rear windshield of the vehicle, or to stopping the rear windshield washer and wiper functions.

9. Control assembly according to one of Claims 1 to 8, **characterized in that** at least one mobile contacting means (4a, 4b, 4c, 4d, 4e, 4f, 4g) of a series (I1, 12, 13, 14, I5, 16, 17) comprises a contacting carriage (6) having at least one conducting element (5) under translational force over the contacting areas (P1, P2).

10. Control assembly according to one of Claims 1 to 9, **characterized in that** at least one mobile contacting means (30) of a series comprises a conducting rotatable yoke (7) under rotational force over the contacting areas (P1, P2).

11. Control assembly according to one of Claims 1 to 10, **characterized in that** at least one mobile contacting means of a series comprises at least one conducting element under force substantially directly over the contacting areas.

12. Control assembly according to one of Claims 1 to 11, **characterized in that** the second contacting areas (P2) connected to the same output of the microcontroller (2) are carried by a common contacting area.

13. Control assembly according to one of the preceding claims, **characterized in that** said network of electrical tracks (REA, REB, REC, RS1-RS7) and said contacting areas (P1, P2) comprise encased metal inserts.

14. Control assembly according to one of Claims 1 to 13, **characterized in that** said mobile contacting means is driven in translation over the contacting areas (P1, P2) by the rotation of a ring (BI, BE) of a selector handle (M1, M2) of the control assembly.

15. Control assembly according to one of Claims 1 to 14, **characterized in that** said mobile contacting means is driven in translation over the contacting areas (P1, P2) by the pivoting of a lever of a selector handle (M1, M2) of the control assembly.

16. Control assembly according to one of the preceding claims, **characterized in that**, amongst the positions that can be taken by said mobile contacting means (4a, 4e, 4f; 30), said mobile contacting means can take, at the most, one neutral position in which it is disconnected from the inputs (EA, EB, EC) of the microcontroller (2).

17. Control assembly according to Claim 16, **characterized in that** it comprises at least one additional switch (01, 05, 06) comprising additional contacting areas (P'1, P'2) which can be contacted by the mobile contacting means (4a, 4e, 4f; 41) in the neutral position, the first additional contacting areas (P'1), at least, being at a floating potential.

18. Control assembly according to either of Claims 16 and 17, **characterized in that**, within a series (I1, I5, 16; I'1), the processing means (3) of the microcontroller (2) are programmed so as to associate a minimum activation safety function for mechanisms of the vehicle when no signal is received on the inputs whereas a signal is sent at the output.

19. Control assembly according to Claim 18, taken together with claim 2, **characterized in that**, in the series (I1) designed to control the lights of the vehicle, the function that can be taken in the neutral position of the mobile contacting means (4a) of the series (I1) corresponds to a command for automatically switching on the low-beam headlights.

20. Control assembly according to either of Claims 18 and 19, taken together with claim 6, **characterized in that**, in the series (I5) designed to control the front windshield wipers of the vehicle, the function that can be taken in the neutral position of the mobile contacting means (4e) of the series (I5) corresponds to a command for automatic activation of the front windshield wipers.

21. Control assembly according to one of Claims 18 to 20, taken together with claim 7, **characterized in that**, in the series (17) designed to control the intermittence frequency of the windshield wipers of the vehicle, the function that can be taken in the neutral position of the mobile contacting means (4f) of the series (16) corresponds to the command for a minimum intermittence frequency.

22. Control assembly according to one of the preceding claims, **characterized in that** a first mobile contacting means (41) associated with a first series (I1) is coupled to the movement of a duplicate mobile contacting means (42) associated with a duplicate series (I'1), the first series (I1) and the duplicate series (I'1) being designed to control the same functions, the first mobile contacting means (41) and the duplicate mobile contacting means (42) being able to simultaneously connect the contacting areas (P1, P2, P'1, P'2) of a switch of the first series (I1) and of a switch of the duplicate series (I'1), the switches of the first series (I1) and of the duplicate series (I'1) designed to control the same function being connected to separate inputs.

23. Control assembly according to Claim 22, **characterized in that** the first mobile contacting means (41) and the duplicate mobile contacting means (42) are rotatable and have conducting elements with an angular offset that are under force against contacting areas (P1, P2) disposed in a circle.
